# EUROPEAN PATENT APPLICATION

(11) **EP 4 534 574 A1**
(43) Date of publication of application: **09.04.2025**
(21) Application number: 23815956.0
(22) Date of filing: 26.05.2023
(51) Int. Cl.: C08G 8/00, C08G 8/20

(54) **METHOD FOR PRODUCING LIGNIN-MODIFIED RESOL-TYPE PHENOL RESIN**

(30) Priority: 02.06.2022 JP 2022090308
(71) Applicant: Sumitomo Bakelite Co.Ltd., Shinagawa-ku Tokyo 140-0002 (JP)
(72) Inventor: MURAI Taketoshi, Tokyo 140-0002 (JP)
(74) Representative: Ter Meer Steinmeister & Partner
(86) International application number: PCT/JP2023/019654
(87) International publication number: WO 2023/234199

(57) **Abstract**

A method for producing a lignin-modified resol-type phenol resin, the method including a step of obtaining a first mixture containing phenols, water, and lignins, in which a ratio between the phenols and the water is 1:0.03 to 1:1.5 in terms of mass ratio of phenols to water, a step of obtaining a second mixture by heating the first mixture at a temperature of 70°C to 120°C at a pH of 7 or less to dissolve the lignins in the phenols and the water, a step of obtaining a third mixture by adding aldehydes and a basic catalyst to the second mixture to adjust a pH to 7.5 to 12, and a step of obtaining a lignin-modified resol-type phenol resin by heating the third mixture at a temperature of 60°C to 105°C, and allowing the lignins, the phenols, and the aldehydes to react with each other in a presence of the basic catalyst.

## Description

### TECHNICAL FIELD

The present invention relates to a method for producing a lignin-modified resol-type phenol resin.

### BACKGROUND ART

Among thermosetting resins, phenol resins are excellent in various respects such as heat resistance, mechanical properties, moldability, and cost and are used in various applications such as molding materials and laminated plates. Incidentally, phenol resins are produced using petroleum as a raw material. Therefore, there is a risk that the production of phenol resins may lead to global warming due to the emission of carbon dioxide. In addition, petroleum is a depleting resource, and this has a significant problem in terms of the stable supply of phenol resins in the future.

In order to solve such environmental problems and the stable supply issue, in recent years, there has been a demand to convert biomass into phenol resin products and the like as a substitute for petroleum-derived products. In order to meet this demand, a lignin-modified phenol resin in which a part of the phenol resin is substituted with a plant-derived resin, that is, lignin, has been studied.

For example, Patent Document 1 discloses a method for synthesizing a lignin-modified phenol resin including performing a step a) of dissolving lignin in an aqueous composition containing a compound selected from the group consisting of phenol, cresol, resorcinol, and a combination thereof, a step b) of allowing the composition in which the lignin is dissolved to react with an alkali to alkalinize the lignin, and a step c) of allowing the composition formed in step b) to react with aldehydes, under a predetermined temperature and a predetermined pH condition.

### RELATED DOCUMENT

### PATENT DOCUMENT

[Patent Document 1] Japanese Patent No. 6588433

### SUMMARY OF THE INVENTION

### TECHNICAL PROBLEM

The inventor of the present invention conducted an investigation and found that there is room for improvement in terms of yield in the method for producing a lignin-modified phenol resin described in Patent Document 1.

### SOLUTION TO PROBLEM

The present invention was made in view of the above-described problems and was completed based on the finding of the inventor that a lignin-modified resol-type phenol resin can be obtained at a high yield by adjusting the production conditions.

According to the present invention, a method for producing a lignin-modified resol-type phenol resin shown below is provided.
[1] A method for producing a lignin-modified resol-type phenol resin, the method including:
   a step of obtaining a first mixture containing phenols, water, and lignins, in which a ratio between the phenols and the water is 1:0.03 to 1:1.5 in terms of mass ratio of phenols to water mass;
   a step of obtaining a second mixture by heating the first mixture at a temperature of 70°C to 120°C at a pH of 7 or less to dissolve the lignins in the phenols and the water;
   a step of obtaining a third mixture by adding aldehydes and a basic catalyst to the second mixture to adjust a pH to 7.5 to 12; and
   a step of obtaining a lignin-modified resol-type phenol resin by heating the third mixture at a temperature of 60°C to 105°C, and allowing the lignins, the phenols, and the aldehydes to react with each other in a presence of the basic catalyst.
[2] The method for producing a lignin-modified resol-type phenol resin according to [1],
   in which the step of obtaining the first mixture includes
   a step of preparing hydrated lignins formed of water and lignins, and
   a step of obtaining the first mixture by mixing the hydrated lignins and the phenols.
[3] The method for producing a lignin-modified resol-type phenol resin according to [1] or [2], further including:
   a step of reducing the water from the first mixture by distilling the first mixture, after the step of obtaining the first mixture and before the step of obtaining the second mixture.
[4] The method for producing a lignin-modified resol-type phenol resin according to any one of [1] to [3],
   in which a weight average molecular weight of the lignins is 2,000 or more and 100,000 or less.
[5] The method for producing a lignin-modified resol-type phenol resin according to any one of [1] to [4],
   in which the step of obtaining the third mixture includes a step of further adding a phenol compound and/or a vegetable oil to the second mixture, and
   the step of obtaining the lignin-modified resol-type phenol resin includes a step of obtaining the lignin-modified resol-type phenol resin by heating the third mixture at a temperature of 60°C to 105°C, and allowing the phenol compound and/or the vegetable oil, the lignins, the phenols, and the aldehydes to react with each other in the presence of the basic catalyst.
[6] The method for producing a lignin-modified resol-type phenol resin according to [5],
   in which the step of obtaining the third mixture by adding the phenol compound, the aldehydes, and the basic catalyst to the second mixture to adjust the pH to 7.5 to 12 includes
   a step of obtaining a mixed solution by mixing the phenol compound with the second mixture and then heating the mixture to dissolve the phenol compound and/or the vegetable oil in the phenols and the water,
   a step of adding the basic catalyst to the mixed solution to adjust a pH to 7.5 to 12, and
   a step of obtaining the third mixture by mixing the aldehydes with the mixed solution in which the pH is adjusted.
[7] The method for producing a lignin-modified resol-type phenol resin according to [5] or [6],
   in which the phenol compound includes alkylphenols.
[8] The method for producing a lignin-modified resol-type phenol resin according to any one of 5 to 7,
   in which the vegetable oil includes at least one selected from cashew nut oil, castor oil, soybean oil, tung oil, linseed oil, tannin, pyrogallol, and tall oil.
[9] A method for producing a lignin-modified resol-type phenol resin, the method comprising:
   a step of obtaining a first mixture containing phenols, water, and lignins, in which a ratio between the phenols and the water is 1:0.03 to 1:1.5 in terms of mass ratio of phenols to water;
   a step of obtaining a second mixture by heating the first mixture at a temperature of 70°C to 120°C at a pH of 7 or less to dissolve the lignins in the phenols and the water;
   a step of obtaining a third mixture by adding a strong acid during or after obtaining the second mixture and heating the mixture to allow the lignins and the phenols to react with each other to obtain a reaction mixture containing phenolized lignins, and adding aldehydes and a basic catalyst to the reaction mixture to adjust a pH to 7.5 to 12; and
   a step of obtaining a lignin-modified resol-type phenol resin by heating the third mixture at a temperature of 60°C to 105°C and allowing the phenolized lignins and the aldehydes to react with each other in a presence of the basic catalyst.
[10] The method for producing a lignin-modified resol-type phenol resin according to [9], further including:
   a step of reducing the water from the second mixture by distilling the second mixture, after the step of obtaining the second mixture and before the step of obtaining the third mixture.
[11] The method for producing a lignin-modified resol-type phenol resin according to [9] or [10],
   in which the step of obtaining the third mixture includes a step of obtaining a third mixture containing phenolized lignins by adding a strong acid when or after obtaining the second mixture and heating the mixture to allow the lignins and the phenols to react with each other, a step of dehydrating the third mixture by distillation and solvating the third mixture with alcohols or ketones, and a step of obtaining the third mixture by adding aldehydes and a basic catalyst to a solution containing the alcohols or ketones to adjust a pH to 7.5 to 12.

### ADVANTAGEOUS EFFECTS OF INVENTION

According to the present invention, a method for producing lignin-modified resol-type phenol resin with an improved yield is provided.

### DESCRIPTION OF EMBODIMENTS

Hereinafter, embodiments of the present invention will be described.

### [First Embodiment]

A method for producing a lignin-modified resol-type phenol resin according to a first embodiment of the present invention includes the following (Step a) to (Step d).
(Step a) A step of obtaining a first mixture by mixing phenols, water, and lignins.
(Step b) A step of obtaining a second mixture by heating the first mixture obtained in the above (Step a) at a temperature of 70°C to 120°C at a pH of 7 or less to dissolve the lignins in the phenols and water.
(Step c) A step of obtaining a third mixture by adding aldehydes and a basic catalyst to the second mixture obtained in the above (Step b) to adjust a pH to 7.5 to 12.
(Step d) A step of obtaining a lignin-modified resol-type phenol resin by heating the third mixture obtained in the above (Step c) at a temperature of 60°C to 105°C, and allowing the lignins and the phenols contained in the third mixture to react with each other in a presence of the basic catalyst.

Hereinafter, each step will be described in detail.

### (Step a)

In (Step a) of the method according to the present embodiment, a first mixture containing phenols, water, and lignins is prepared.

In the first mixture obtained in the above (Step a), a ratio between the phenols to the water is 1:0.03 to 1:1.5 in terms of mass ratio of phenols to water.

The first mixture containing the phenols, the water, and the lignins in the above (Step a) can be obtained by (a1) charging the phenols, the water, and the lignins, which are separately prepared, into a container and mixing the components, (a2) first mixing the phenols and the water to obtain a phenols/water mixed solvent, and then mixing the lignins with this mixed solvent, (a3) first mixing the phenols and the lignins to obtain a mixture and then mixing the mixture with water, and (a4) preparing hydrated lignins formed of water and lignins and then mixing the hydrated lignins with the phenols. Here, the lignins in the methods of the above (a1) to (a3) may be in any form of a solid, a dispersion, or a solution. In addition, the hydrated lignin in the method of (a4) may be in the form of a solid or an aqueous solution.

The phenols and the water used in the above (Step a) are used in an amount such that a ratio between the phenols and water, phenols to water (mass ratio), contained in the first mixture to be obtained is 1:0.03 to 1:1.5. The ratio between the phenols and the water in the first mixture is preferably 1:0.1 to 1:1.0, and more preferably 1:0.2 to 1:0.6 in terms of phenols to water (mass ratio). By setting the ratio between the phenols and the water contained in the first mixture to be within the above range, the lignins can be easily dispersed and dissolved in the phenols and the water. As a result, the reaction efficiency between the lignins and the aldehydes in the subsequent (Step d) can be improved.

Here, the amount of water contained in the first mixture is an amount obtained by combining the amount of water contained in the lignins and the amount of water used as a solvent.

In (Step a), the lignins and the phenols are used in an amount such that a mass ratio of lignins to phenols is, for example, 1:10 to 2:1, and preferably 1:4 to 4:3.

The phenols used in the above (Step a) act not only as a solvent but also as raw material monomers for a resole-type phenol resin. In addition, since the lignins are easily soluble in the phenols and are insoluble in the water under conditions at a pH of 7 or less, in (Step b) following (Step a), the lignins can be appropriately dispersed and easily dissolved in the mixed solvent. As a result, a reaction solution in which the lignins and the phenols are satisfactorily blended and homogenized is obtained, and the reaction efficiency of the lignins in (Step d) can be improved.

Examples of the phenols used in the above (Step a) include phenol, a phenol derivative, and a combination thereof. As the phenol derivative, a phenol having a molecular weight of 150 or less and having any substituent introduced into the benzene ring can be used. Examples of the substituent include a hydroxy group; a lower alkyl group such as a methyl group, an ethyl group, a propyl group, or a butyl group; a halogen atom such as fluorine, chlorine, bromine, or iodine; an amino group; a nitro group; and a carboxy group. Specific examples of the phenols that can be used in the method according to the present embodiment include phenol, catechol, resorcinol, hydroquinone, o-cresol, m-cresol, p-cresol, ethylphenol, propylphenol, isopropylphenol, butylphenol, secondary butylphenol, tertiary butylphenol, o-fluorophenol, m-fluorophenol, p-fluorophenol, o-chlorophenol, m-chlorophenol, p-chlorophenol, o-bromophenol, m-bromophenol, p-bromophenol, o-iodophenol, m-iodophenol, p-iodophenol, o-aminophenol, m-aminophenol, p-aminophenol, o-nitrophenol, m-nitrophenol, p-nitrophenol, 2,4-dinitrophenol, 2,4,6-trinitrophenol, salicylic acid, and p-hydroxybenzoic acid. As the phenol compound, one type may be used alone, or two or more types thereof may be used in combination. Among these, from the viewpoint of good handleability, it is preferable to use phenol, cresol, resorcinol, and xylenol as the phenols.

The lignins used in the above (Step a) include lignin or a lignin derivative, and a combination thereof.

Lignin is a major component that forms a structure of a plant together with cellulose and hemicellulose, and is one of the most abundant aromatic compounds in nature. Since lignin is partially bound together and exists as lignocellulose in plants, lignin often refers to a substance that can be obtained from plants through decomposition or the like, and examples include pulp lignins such as kraft lignin, lignin sulfonic acid, soda lignin, and soda-anthraquinone lignin; organosolv lignin; lignophenol obtained when phenol is added to high-temperature high-pressure water-treated lignin or blasted lignin during extraction or the like with concentrated sulfuric acid; and phenolized lignin. The origin of lignin is not particularly limited, and examples include wood that contains lignin and forms woody parts, and herbs, which include coniferous trees such as cedar, pine, cypress, and spruce; broadleaf trees such as beech, birch, oak, zelkova, and eucalyptus; and gramineous plants (herbs) such as paddy, wheat, maize, and bamboo.

In the embodiment, the "lignin derivative" refers to a compound having a unit structure constituting lignin or a structure similar to the unit structure constituting lignin. The lignin derivative includes a phenol derivative as the unit structure. Since this unit structure has a chemically and biologically stable carbon-carbon bond or carbon-oxygen-carbon bond, the unit structure is less likely to be affected by chemical deterioration and biological decomposition.

Examples of the lignin derivative include guaiacylpropane (ferulic acid) represented by Formula (A) of the following Formula (1), syringylpropane (sinapic acid) represented by the following Formula (B), and 4-hydroxyphenylpropane (coumaric acid) represented by the following Formula (C). The composition of the lignin derivative varies depending on the biomass used as a raw material. From coniferous trees, lignin derivatives including a guaiacylpropane structure are mainly extracted. From broadleaf trees, lignin derivatives including a guaiacylpropane structure and a syringylpropane structure are mainly extracted. From herbs, lignin derivatives including a guaiacylpropane structure, a syringylpropane structure, and a 4-hydroxyphenylpropane structure are mainly extracted.

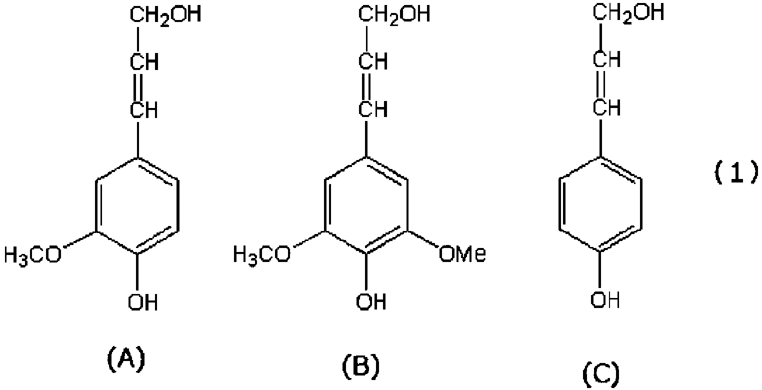

The lignin derivative is preferably obtained by decomposing biomass. Since biomass is a product obtained by incorporating and fixing carbon dioxide in the atmosphere during the process of photosynthesis, the biomass contributes to suppression of an increase in carbon dioxide in the atmosphere, and the industrial utilization of the biomass can contribute to suppression of global warming. Examples of the biomass include a lignocellulose-based biomass. Examples of the lignocellulose-based biomass include leaves, barks, branches, and woods of plants containing lignin, and processed products thereof. Examples of the plants containing lignin include the above-mentioned broadleaf trees, coniferous trees, and herbs.

Examples of a method for decomposing biomass include a method of performing a chemical treatment, a method of performing a hydrolysis treatment, a steam blasting method, a supercritical water treatment method, a subcritical water treatment method, a method of performing a mechanical treatment, a cresol sulfate method, and a pulp production method. From the viewpoint of environmental load, a steam blasting method, a subcritical water treatment method, and a method of performing a mechanical treatment are preferable. From the viewpoint of cost, a pulp production method is preferable. Further, from the viewpoint of cost, it is preferable to use a by-product of biomass utilization. A lignin derivative can be prepared by, for example, subjecting biomass to a decomposition treatment in the presence of various cooking liquors and solvents at 150°C to 400°C and 1 to 40 MPa for 8 hours or shorter. In addition, lignin derivatives can be prepared by the methods disclosed in Japanese Unexamined Patent Publication No. 2009-084320, Japanese Unexamined Patent Publication No. 2012-201828, and the like.

Examples of the lignin derivative include a product obtained by decomposing lignocellulose in which lignin, cellulose, and hemicellulose are bound together. Examples of the lignin derivative may include lignin decomposition products, cellulose decomposition products, hemicellulose decomposition products, and the like, all of which include compounds having a lignin skeleton as main components. Further, the lignin derivative may also include biomass-derived or process-derived inorganic substances. However, when the lignin derivative is used for the application of the present embodiment, the content of the inorganic substances is preferably 10% by mass or less with respect to the total amount of the lignin derivative used.

It is preferable that the lignin derivative has many reaction sites on which a curing agent acts through an electrophilic substitution reaction toward an aromatic ring, and from the viewpoint that the reactivity is excellent when steric hindrance in the vicinity of the reaction sites is small, it is preferable that at least one of the ortho-position or the para-position of the aromatic ring including a phenolic hydroxyl group is unsubstituted. A lignin derived from a coniferous tree or a herb including a large quantity of structures of guaiacyl nuclei and 4-hydroxyphenyl nuclei as the aromatic unit of the lignin is preferable. As the lignin derivative, those disclosed in Japanese Unexamined Patent Publication No. 2009-084320, Japanese Unexamined Patent Publication No. 2012-201828, and the like can be used.

In addition, the lignin derivative may also be a lignin derivative (secondary lignin derivative) having a functional group in addition to the above-described basic structure.

The functional group included in the secondary lignin derivative is not particularly limited, and, for example, a functional group that can react with two or more of the same functional groups or a functional group that can react with another functional group is suitable. Specific examples include an epoxy group and a methylol group, as well as a vinyl group having an unsaturated carbon-carbon bond, an ethynyl group, a maleimide group, a cyanate group, and an isocyanate group. Among these, a lignin derivative into which a methylol group is introduced (methylolated) is preferably used. Such a secondary lignin derivative undergoes self-crosslinking through a selfcondensation reaction between methylol groups, and undergoes crosslinking with an alkoxymethyl group or a hydroxyl group present in a crosslinking agent that will be described below. As a result, a lignin-modified novolac-type phenol resin having a particularly homogeneous and rigid skeleton and having excellent solvent resistance can be obtained.

Furthermore, the lignin derivative used in the present embodiment may have a carboxyl group. A lignin obtained by a pulping process or a high-temperature high-pressure water treatment may have a carboxyl group. Since a lignin-modified novolac-type phenol resin obtained from a lignin derivative having a carboxyl group has many crosslinking points for a curing agent that will be described below, the crosslinking density of the obtained crosslinked body can be improved, and as a result, a crosslinked body having excellent solvent resistance can be obtained.

In a case where the above-mentioned lignin derivative has a carboxyl group, the carboxyl group can be checked by the presence or absence of absorption of a peak at 172 to 174 ppm when the lignin derivative is subjected to a ¹³C-NMR analysis pertaining to the carboxyl group.

The lignins used in the present embodiment have a weight average molecular weight of, for example, 2,000 or more and 100,000 or less. The lower limit value of the weight average molecular weight is preferably 3,000 or more, more preferably 4,000 or more, and still more preferably 5,000 or more. The upper limit value of the weight average molecular weight is preferably 90,000 or less, more preferably 80,000 or less, and still more preferably 60,000 or less. Lignins having a weight average molecular weight within the above range are easily dissolved in the above-mentioned mixed solvent and have excellent handleability. The weight average molecular weight is a weight average molecular weight in terms of polystyrene, which is measured by gel permeation chromatography, and can be determined by the method described in Examples.

Here, an example of the method for measuring the molecular weight using the above-mentioned gel permeation chromatography will be described.

In the method for measuring the molecular weight by gel permeation chromatography, first, a lignin derivative is dissolved in a solvent to prepare a measurement sample. The solvent used at this time is not particularly limited as long as it can dissolve the lignin derivative. However, from the viewpoint of the measurement accuracy of gel permeation chromatography, for example, tetrahydrofuran and N-methyl-2-pyrrolidone are preferable. Since the lignins used in the production of the lignin-modified novolac-type phenol resin used in the present embodiment may include insoluble matter based on biomass, process-derived inorganic substances, and plant-derived high molecular weight organic substances, the molecular weight of the lignins is determined by selecting an appropriate solvent and filtering the insoluble matter. In addition, in order to increase the lignin modification ratio of the obtained lignin-modified resol-type phenol resin, the content of the insoluble matter of the lignins used is preferably 30% by mass or less in an appropriate solvent.

Next, "TSKgel Super AW4000 (manufactured by Tosoh Corporation)", "TSKgel Super AW3000 (manufactured by Tosoh Corporation)", and "TSKgel Super AW2500 (manufactured by Tosoh Corporation)", which are organic general purpose columns packed with a styrene-based polymer filler, are connected in series to a GPC system "HLC-8420GPC EcoSEC Elite (manufactured by Tosoh Corporation)". 30 µL of the aforementioned measurement sample is injected into the GPC system, N-methyl-2-pyrrolidone as an eluent is developed at 40°C at a rate of 0.3 mL/min, and the retention time is measured by using the differential refractive index (RI) and the ultraviolet absorbance (UV). From a separately created calibration curve showing the relationship between the retention time and the molecular weight of standard polystyrene, the number average molecular weight and the weight average molecular weight of the target lignins can be calculated. The refractive index is preferable as the detection mode.

The molecular weight of the standard polystyrene used for creating the calibration curve is not particularly limited; and, for example, standard polystyrenes (manufactured by Tosoh Corporation) having weight average molecular weights of 2,110,000, 1,090,000, 427,000, 190,000, 37,900, 18,100, 5,970, 2,420 and 500 can be used.

The content of volatile matter of the lignins is preferably 60% by mass or less, more preferably 50% by mass or less, and still more preferably 40% by mass or less. By setting the content of volatile matter of the lignins within the above range, the reactivity of the lignins can be improved, and the reaction rate of the obtained lignin-modified novolac-type phenol resin can be increased. The main volatile matter is often water, and for example, the content is calculated by spreading 4 g in an aluminum cup and drying the component at 80°C for 20 hours.

In a case where lignins obtained by decomposing biomass are used, a large amount of components having a low molecular weight may be mixed, and these components may cause volatile matter and offensive odor during heating and a decrease in the softening point. These components can be utilized as they are, or can be removed by heating, drying, and the like of the lignins to adjust the softening point and offensive odor.

As described above, the lignins used in the above (Step a) may be used in the form of a solid, a dispersion liquid, or a solution, or may be used as hydrated lignins in the form of a solid or an aqueous solution. In a case of using lignins in the form of an aqueous solution, the lignin aqueous solution may be distilled to reduce the amount of water contained in the lignin aqueous solution.

The first mixture containing the phenols, the water, and the lignins obtained in the above (Step a) may be subjected to a step of reducing the amount of water contained in the first mixture before (Step b). The step of reducing the amount of water contained in the first mixture can be carried out, for example, by using a distillation method. It is preferable that the step of reducing the amount of water in the first mixture is carried out until the ratio between the phenols and the water in the finally obtained first mixture is 1:0.01 to 1:0.5 in terms of mass ratio of phenols to water. By setting the amount of water to be within the above range, the yield of the lignin-modified resol-type phenol resin in (Step d) can be improved.

### (Step b)

In (Step b) of the method according to the present embodiment, a second mixture is obtained by heating the first mixture obtained in the above (Step a) at a temperature of 70°C to 120°C at a pH of 7 or less to dissolve the lignins in the phenols and the water.

In (Step b), the pH of the first mixture obtained in the above (Step a) and containing the lignins, the phenols, and the water is adjusted to 7 or less and the first mixture is then heated to a temperature of 70°C to 120°C. The pH of the first mixture can be adjusted by adding any acid or alkali. The pH of the first mixture is preferably 1 to 7, and more preferably 2 to 6. By adjusting the pH to such a range, the lignins can be blended and dissolved in the phenols and the water. In addition, in order to dissolve the lignins in the phenols and the water, the lignins are heated to a temperature of 70°C to 120°C, and preferably to a temperature of 80°C to 100°C. By performing heating at a temperature within the above range, the lignins are easily dissolved in the mixed solvent.

### (Step c)

In (Step c) of the method according to the present embodiment, a third mixture is obtained by adding aldehydes and a basic catalyst to the second mixture obtained in the above (Step b) to adjust the pH to 7.5 to 12.

Examples of the aldehydes used in (Step c) include formaldehyde, paraformaldehyde, trioxane, acetaldehyde, propionaldehyde, polyoxymethylene, chloral, hexamethylenetetramine, furfural, glyoxal, n-butylaldehyde, caproaldehyde, allylaldehyde, benzaldehyde, crotonaldehyde, acrolein, tetraoxymethylene, phenyl acetaldehyde, o-tolualdehyde, salicylaldehyde, and paraxylenedimethyl ether. Preferred are formaldehyde, paraformaldehyde, trioxane, polyoxymethylene, acetaldehyde, paraxylene dimethyl ether, and combinations thereof. As the aldehydes, one type may be used alone, or two or more types thereof may be used in combination. Among these, from the viewpoint of productivity and cost, it is preferable to use formaldehyde or acetaldehyde.

Examples of the basic catalyst used in (Step c) include hydroxides of alkali metals or alkaline earth metals, such as sodium hydroxide, potassium hydroxide, and calcium hydroxide; carbonates such as sodium carbonate and calcium carbonate; oxides such as lime; sulfites such as sodium sulfite; phosphates such as sodium phosphate; and amines such as ammonia, trimethylamine, triethylamine, monoethanolamine, diethanolamine, triethanolamine, hexamethylenetetramine, and pyridine.

In one embodiment, in (Step c), in addition to the aldehydes and the basic catalyst, a phenol compound and/or a vegetable oil different from the phenols and the lignins used in the above (Step a) may be added. In a case of adding a phenol compound or a vegetable oil, in the subsequent (Step d), by carrying out a reaction between the lignins and the phenols used in (Step a), the phenol compound or vegetable oil, and the aldehydes, a resole-type phenol resin is produced.

Examples of the phenol compound that can be used in (Step c) include alkylphenols. As the alkylphenols, phenols having an alkyl group and having a molecular weight of more than 150 are preferably used. Specific examples include amylphenol, tertiary amylphenol, hexylphenol, heptylphenol, octylphenol, tertiary octylphenol, nonylphenol, tertiary nonylphenol, decylphenol, undecylphenol, dodecylphenol, tridecylphenol, tetradecylphenol, pentadecylphenol, cardanol, cardol, urushiol, hexadecylphenol, methyl cardol, heptadecylphenol, laccol, thiol, and octadecylphenol. As the phenol compound, one type may be used alone, or two or more types may be used in combination.

Examples of the vegetable oils that can be used in (Step c) include cashew nut oil, castor oil, soybean oil, tung oil, linseed oil, tannin, pyrogallol, and tall oil. As the vegetable oil, one type may be used alone, or two or more types may be used in combination. In addition, any one of the phenol compound and the vegetable oil may be used or these may be used in combination.

In a case where the phenol compound and/or the vegetable oil is added to the second mixture in (Step c), it is preferable that, first, a mixed solution is obtained (Step (c-1) by mixing the phenol compound and/or the vegetable oil with the second mixture, and then heating the mixture to dissolve the phenol compound and/or the vegetable oil in the solvent (the mixed solvent of the phenols and the water) in (Step a). Next, it is preferable that the above-mentioned basic catalyst is added to this mixed solution to adjust the pH to 7.5 to 12 (Step (c-2)), and then the third mixture is obtained (Step (c-3)) by mixing the above-mentioned aldehydes with the mixed solution in which the pH is adjusted. In a case of using the phenol compound and/or the vegetable oil, the phenol compound and/or the vegetable oil can be easily dissolved in the second mixture by adding the phenol compound and/or the vegetable oil to the second mixture before adding the basic catalyst.

In a case where both the phenol compound and the vegetable oil are used, the phenol compound and the vegetable oil may be added to the second mixture in (Step c) in any order. Alternatively, a mixture obtained by mixing the phenol compound and the vegetable oil in advance can be added to the second mixture.

The aldehydes used in (Step c) are used in an amount such that the blending molar ratio (F/P) between the aldehydes (F) and the phenols (P) is 0.8 or more, preferably 0.8 or more and 5.0 or less, more preferably 1.0 or more and 3.5 or less, and still more preferably 1.2 or more and 2.5 or less.

The basic catalyst used in (Step c) is used in an amount of 1% to 30% by mass with respect to the total amount of the phenols, the lignins, and the aldehydes, and if used, the phenol compound and/or the vegetable oil.

In a case where the phenol compound and/or the vegetable oil described above is used in (Step c), the amount thereof is preferably 1% to 200% by mass with respect to the phenols used in (Step a). In a case where both the phenol compound and the vegetable oil are used, it is preferable that the total amount thereof is within the above-described range.

### (Step d)

In (Step d) of the method according to the present embodiment, a lignin-modified resol-type phenol resin is obtained by heating the third mixture obtained in the above (Step c) at a temperature of 60°C to 105°C, and allowing the lignins, the phenols, and the aldehydes contained in the third mixture to react with each other in the presence of the basic catalyst. In a case where the phenol compound and/or the vegetable oil is used in the above (Step c), in (Step d), the lignins, the phenols, the phenol compound and/or the vegetable oil, and the aldehydes are allowed to react with each other in the presence of the basic catalyst to obtain the lignin-modified resol-type phenol resin.

In (Step d), the third mixture is heated at a temperature of 60°C to 105°C. The heating temperature in (Step d) can be appropriately selected depending on the types of the lignins and the phenols, and if used, the phenol compound and/or the vegetable oil contained in the third mixture, as well as the physical properties of the desired resole-type phenol resin. The heating time in (Step d) is, for example, 10 minutes to 100 minutes, and preferably 30 minutes to 60 minutes. By heating the third mixture at the above-described temperature for the above-described time, the reaction of the lignins, the phenols, the phenol compound (if used), the vegetable oil (if used), and the aldehydes contained in the third mixture proceeds, and a resole-type phenol resin can be produced.

In the lignin-modified resol-type phenol resin obtained by the method according to the present embodiment, the amount of free phenol contained therein is 5.0% by mass or less with respect to the lignin-modified resol-type phenol resin in a preferable aspect, and is 4.0% by mass or less with respect to the lignin-modified resol-type phenol resin in a more preferable aspect. The lower limit value of the amount of free phenol contained in the lignin-modified resol-type phenol resin is not particularly limited, and is, for example, 0.1% by mass or more, and preferably 0.5% by mass or more with respect to the lignin-modified resol-type phenol resin. In a case where the amount of free phenol is equal to or less than the upper limit value, the lignin-modified resol-type phenol resin has excellent handleability and a wide application range. In addition, in a case where the amount of the free phenol is equal to or more than the above-described lower limit value, since no special equipment or process is required to completely remove the free aldehyde, the production cost can be suppressed.

### [Second Embodiment]

A method for producing a lignin-modified resol-type phenol resin according to a second embodiment of the present invention includes the following (Step i) to (Step iv).
(Step i) A step of obtaining a first mixture containing phenols, water, and lignins.
(Step ii) A step of obtaining a second mixture by heating the first mixture obtained in the above (Step i) at a temperature of 70°C to 120°C at a pH of 7 or less to dissolve the lignins in the phenols and the water.
(Step iii-1) A step of obtaining a reaction mixture containing phenolized lignins by adding a strong acid during or after obtaining the second mixture that can be obtained in the above (Step ii) and heating the mixture to allow the lignins and the phenols to react with each other.
(Step iii-2) A step of obtaining a third mixture by adding aldehydes and a basic catalyst to the reaction mixture containing the phenolized lignins obtained in the above (Step iii-1) to adjust the pH to 7.5 to 12.
(Step iv) A step of obtaining a lignin-modified resol-type phenol resin by heating the third mixture obtained in the above (Step iii-2) at a temperature of 60°C to 105°C and allowing the phenolized lignins and the aldehydes to react with each other in the presence of the basic catalyst.

Hereinafter, each step will be described in detail.

### (Step i)

The (Step i) in the present embodiment is the same as the (Step a) in the first embodiment.

### (Step ii)

The (Step ii) in the present embodiment is the same as the (Step b) in the first embodiment.

In the (Step iii-1) of the method of this embodiment, during or after obtaining the second mixture, which is the aqueous solution containing the lignins and the phenols and is obtained in (Step ii), a strong acid is added, and then the mixture is heated to allow the lignins and the phenols to react with each other to obtain phenolized lignins.

In one embodiment, before (Step iii-1) is performed, the aqueous solution (second mixture) obtained in (Step ii) and obtained by dissolving the lignins and the phenols may be distilled to remove the water contained therein. By performing the dehydration step, the reaction efficiency between the lignins and the phenols can be improved.

Examples of the strong acid used in the reaction between the lignins and the phenols include sulfuric acid with a concentration of 65% by mass or more, phosphoric acid with a concentration of 85% by mass or more, hydrochloric acid with a concentration of 38% by mass or more, p-toluenesulfonic acid, trifluoroacetic acid, trichloroacetic acid, and formic acid, but the present invention is not limited thereto.

The reaction between the lignins and the phenols can be carried out, for example, by heating the above-described second mixture at a temperature of 90°C to 120°C, and preferably at a temperature of 100°C to 115°C.

The phenolized lignins obtained by the above-described method have a lignin skeleton and has a large number of phenolic hydroxyl groups as reactive groups. Therefore, the phenolized lignin can react with the aldehydes using the phenolic hydroxyl group as a reactive group to produce a phenol resin (lignin-modified phenol resin) containing a lignin skeleton.

In one embodiment, after obtaining the phenolized lignins, the reaction mixture containing the phenolized lignins may be dehydrated and solvated with alcohols, ketones, or the like. As the dehydration treatment, for example, a distillation method can be used. Examples of the alcohols used include methanol, ethanol, propanol, and 1-methoxy-2-propanol, and examples of the ketones include acetone and methyl ethyl ketone.

In (Step iii-2) of the method according to the present embodiment, a third mixture is obtained by adding aldehydes and a basic catalyst to the reaction mixture containing the phenolized lignins obtained in the above (Step iii-1) to adjust the pH to 7.5 to 12.

The (Step iii-2) of the present embodiment is the same as (Step c) of the first embodiment.

### (Step iv)

In (Step iv) of the present embodiment, a phenol resin (lignin-modified resol-type phenol resin) containing a lignin skeleton is obtained by heating the third mixture obtained in (Step iii-2) at a temperature of 60°C to 105°C to allow the phenolized lignins and the aldehydes to react with each other in the presence of the basic catalyst.

The (Step iv) of the present embodiment can be carried out under the same conditions as the (Step d) of the first embodiment.

The embodiments of the present invention have been described above; however, these are only examples of the present invention, and various configurations other than the above-described ones can be employed.

### EXAMPLES

Hereinafter, the present invention will be described with reference to Examples and Comparative Examples, but the present invention is not limited thereto.

### (Example 1)

### (Preparation of Lignin Derivative)

First, a lignin derivative used for synthesizing a lignin-modified novolac-type phenol resin was prepared by the following procedure.

1500 parts by weight of cedar wood flour having a moisture content of 50% by mass, as well as 5000 parts by weight of pure water, 180 parts by weight of sodium hydroxide, and 120 parts by mass of sodium carbonate as a cooking liquor, and 7.5 parts by weight of 9,10-anthraquinone as a cooking aid were charged into a stainless steel autoclave facility having a capacity of 10 L, and a digestion reaction was carried out with stirring at 170°C for 3 hours. The cooking liquor after the reaction was cooled to room temperature, a pulp component was removed with a screen, and then a black liquor including lignin was separated. Dilute sulfuric acid was added to the separated black liquor to adjust the pH to 8, and a precipitate obtained was centrifuged. After washing twice with 500 parts by mass of water, the precipitate was suspended in 5 times the amount of water, and the suspension was readjusted to pH 2 with dilute sulfuric acid. The precipitated lignin was centrifuged again, washed with water, subsequently filtered under suction, spread on a vat, air-dried, and dried in an oven under reduced pressure at a 70°C or lower, and 140 parts by mass to 150 parts by weight (in terms of solid content) of an alkali lignin (hydrated lignin) in the form of a brown powder having a solid content of 59% by mass or more was obtained.

A portion of the obtained hydrated lignin was further dried in an oven under reduced pressure at 80°C or lower to obtain an alkali lignin with a solid content of 99% by mass. The solid content ratio was calculated from the residual ratio after putting 4 g of a sample in an aluminum cup and drying the sample by heating at 135°C for 1 hour. The number average molecular weight (Mn) of the obtained lignin derivative was 2,000, and the weight average molecular weight (Mw) was 14,000.

### (Synthesis of Lignin-Modified Phenol Resin)

Next, a lignin-modified phenol resin was synthesized by the following procedure using the prepared alkali lignin with a solid content of 99% by mass.
(First Step) 100 parts by weight of phenol and 69.5 parts by weight of water were added to a four-neck flask equipped with a stirrer, a cooling tube, and a thermometer to prepare a mixed solvent. Next, the temperature of the mixed solvent was adjusted to 60°C. Next, while stirring, 100 parts by weight of alkali lignin with a solid content of 99% by mass was added in a divided manner to obtain a first mixture. The quantitative ratio of phenol to water in the first mixture was phenol:water (mass ratio) = 1:0.7.
(Second Step) The first mixture obtained in the first step was heated to 90°C and stirred for 20 minutes to dissolve the alkali lignin with a solid content of 99% by mass in the phenol/water mixed solvent, and it was visually confirmed that there were no suspended matter. The obtained mixture was used as a second mixture.
(Third Step) The second mixture obtained in the second step was cooled to 60°C, 20 parts by mass of a 50% aqueous solution of sodium hydroxide was then added, and subsequently, 146.4 parts by weight of 37% formaldehyde was added with careful attention to the temperature increase to obtain a third mixture.
(Fourth Step) The third mixture obtained in the third step was allowed to react at 60°C for 60 minutes, the temperature was further raised to 85°C, and the mixture was allowed to react for 80 minutes. Thereafter, the mixture was rapidly cooled, and pure water was added to adjust the viscosity to any level. Thereafter, a trace amount of fibrous insoluble matter was removed through a 200-mesh filter to obtain a lignin-modified resol-type phenol resin. In the obtained lignin-modified phenol resin, the content of non-volatile matter was 55% by mass, the water solubility was 25 times or more, the solution resin viscosity was 756 mPa·s, the amount of free phenol was 4.9% by mass, and the amount of free formaldehyde was 0.6% by mass.

### (Example 2)

(First Step) 100 parts by weight of phenol was charged into a four-neck flask equipped with a stirrer, a cooling tube, and a thermometer. Next, the temperature of the phenol was adjusted to 60°C. Next, while stirring, 169.5 parts by weight of the hydrated lignin in the form of a brown powder having a solid content of 59% by mass, prepared in Example 1, was added in a divided manner to obtain the first mixture. The quantitative ratio of phenol to water in the first mixture was phenol:water (mass ratio) = 1:0.7.

(Second Step) The first mixture obtained in the first step was treated under the same conditions as in the second step of Example 1 to dissolve the hydrated lignin, and a second mixture was obtained.

(Third Step) The second mixture was treated under the same conditions as in the third step of Example 1 to obtain a third mixture.

(Fourth Step) The third mixture obtained in the third step was allowed to react at 60°C for 60 minutes, the temperature was further raised to 85°C, and the mixture was allowed to react for 80 minutes. Thereafter, the mixture was rapidly cooled, and pure water was added to adjust the viscosity to any level. Thereafter, a trace amount of fibrous insoluble matter was removed through a 200-mesh filter to obtain a lignin-modified resol-type phenol resin.

The content of non-volatile matter, the water solubility, the solution resin viscosity, the amount of free phenol, and the amount of free formaldehyde of the obtained lignin-modified phenol resin are as shown in Table 1.

### (Example 3)

(First Step) A first mixture was obtained in the same manner as in the first step of Example 1, except that the amount of water was changed to 42.9 parts by weight. The quantitative ratio of phenol to water in the first mixture was phenol:water (mass ratio) = 1:0.44.

Next, the obtained first mixture was distilled, and water was removed from the first mixture until the mass ratio between phenol and water in the first mixture was phenol:water = 1:0.05.

(Second Step) The first mixture obtained in the first step was treated under the same conditions as in the second step of Example 1 to obtain a second mixture.

(Third Step) The second mixture was treated under the same conditions as in the third step of Example 1 to obtain a third mixture.

(Fourth Step) The third mixture obtained in the third step was allowed to react at 60°C for 60 minutes, the temperature was further raised to 85°C, and the mixture was allowed to react for 40 minutes. Thereafter, the mixture was rapidly cooled, and pure water was added to adjust the viscosity to any level. Thereafter, a trace amount of fibrous insoluble matter was removed through a 200-mesh filter to obtain a lignin-modified resol-type phenol resin.

The content of non-volatile matter, the water solubility, the solution resin viscosity, the amount of free phenol, and the amount of free formaldehyde of the obtained lignin-modified phenol resin are as shown in Table 1.

### (Example 4)

(First Step) A first mixture was obtained in the same manner as in the first step of Example 2. The quantitative ratio of phenol to water in the first mixture was phenol:water (mass ratio) = 1:0.7.

Next, the obtained first mixture was distilled, and water was removed from the first mixture until the mass ratio between phenol and water in the first mixture was phenol:water = 1:0.05.

(Second Step) The first mixture obtained in the first step was treated under the same conditions as in the second step of Example 1 to obtain a second mixture.

(Third Step) The second mixture was treated under the same conditions as in the third step of Example 1 to obtain a third mixture.

(Fourth Step) The third mixture obtained in the third step was allowed to react at 60°C for 60 minutes, the temperature was further raised to 85°C, and the mixture was allowed to react for 40 minutes. Thereafter, the mixture was rapidly cooled, and pure water was added to adjust the viscosity to any level. Thereafter, a trace amount of fibrous insoluble matter was removed through a 200-mesh filter to obtain a lignin-modified resol-type phenol resin.

The content of non-volatile matter, the water solubility, the solution resin viscosity, the amount of free phenol, and the amount of free formaldehyde of the obtained lignin-modified phenol resin are as shown in Table 1.

### (Example 5)

(First Step) 100 parts by weight of phenol was charged into a four-neck flask equipped with a stirrer, a cooling tube, and a thermometer. Next, the temperature of the phenol was adjusted to 60°C. Next, while stirring, 153.9 parts by weight of the hydrated lignin in the form of a brown powder having a solid content of 59% by mass, prepared in Example 1, was added in a divided manner to obtain a first mixture. The quantitative ratio of phenol to water in the first mixture was phenol:water (mass ratio) = 1:0.79.

Next, the obtained first mixture was distilled, and water was removed from the first mixture until the mass ratio between phenol and water in the first mixture was phenol:water = 1:0.05.

(Second Step) The first mixture obtained in the first step was treated under the same conditions as in the second step of Example 1 to obtain a second mixture.

(Third Step) The second mixture obtained in the second step was cooled to 60°C, 20 parts by mass of a 50% aqueous solution of sodium hydroxide was then added, and subsequently, 124.2 parts by weight of 37% formaldehyde was added with careful attention to the temperature increase to obtain a third mixture.

(Fourth Step) The third mixture obtained in the third step was allowed to react at 60°C for 60 minutes, the temperature was further raised to 85°C, and the mixture was allowed to react for 80 minutes. Thereafter, the mixture was rapidly cooled, and pure water was added to adjust the viscosity to any level. Thereafter, a trace amount of fibrous insoluble matter was removed through a 200-mesh filter to obtain a lignin-modified resol-type phenol resin.

### (Example 6)

(First Step) 100 parts by weight of phenol was charged into a four-neck flask equipped with a stirrer, a cooling tube, and a thermometer. Next, the temperature of the phenol was adjusted to 60°C. Next, while stirring, 169.5 parts by weight of the hydrated lignin in the form of a brown powder having a solid content of 59% by mass, prepared in Example 1, was added in a divided manner to obtain the first mixture. The quantitative ratio of phenol to water in the first mixture was phenol:water (mass ratio) = 1:0.7.

(Second Step) The first mixture obtained in the first step was treated under the same conditions as in the second step of Example 1 to dissolve the hydrated lignin, and a second mixture was obtained.

(Third Step) The second mixture was distilled to remove water. To the second mixture after dehydration, 98% sulfuric acid was added, and the mixture was heated at 110°C for 30 minutes. Next, the obtained reaction mixture was cooled to 60°C, 20.5 parts by mass of a 50% aqueous solution of sodium hydroxide was then added, and subsequently, 137.7 parts by weight of 37% formaldehyde was added with careful attention to the temperature increase to obtain a third mixture.

(Fourth Step) The third mixture obtained in the third step was allowed to react at 60°C for 60 minutes, the temperature was further raised to 85°C, and the mixture was allowed to react for 80 minutes. Thereafter, the mixture was rapidly cooled, and pure water was added to adjust the viscosity to any level. Thereafter, a trace amount of insoluble matter was removed through a 200-mesh filter to obtain a lignin-modified resol-type phenol resin.

The content of non-volatile matter, the water solubility, the solution resin viscosity, the amount of free phenol, and the amount of free formaldehyde of the obtained lignin-modified phenol resin are as shown in Table 1.

### (Example 7)

(First Step) 100 parts by weight of phenol was charged into a four-neck flask equipped with a stirrer, a cooling tube, and a thermometer. Next, the temperature of the phenol was adjusted to 60°C. Next, while stirring, 169.5 parts by weight of the hydrated lignin in the form of a brown powder having a solid content of 59% by mass, prepared in Example 1, was added in a divided manner to obtain the first mixture. The quantitative ratio of phenol to water in the first mixture was phenol:water (mass ratio) = 1:0.7.

(Second Step) The first mixture obtained in the first step was treated under the same conditions as in the second step of Example 1 to dissolve the hydrated lignin, and a second mixture was obtained.

(Third Step) The second mixture was distilled to remove water. To the second mixture after dehydration, 98% sulfuric acid was added, and the mixture was heated at 110°C for 30 minutes. Thereafter, the obtained reaction mixture was dehydrated by distillation, and 201.4 parts by weight of methanol were added. Next, the obtained methanol solution was cooled to 60°C, 30.0 parts by weight of triethylamine was then added, and subsequently, 86.2 parts by weight of 37% formaldehyde was added with careful attention to the temperature increase.

(Fourth Step) The third mixture obtained in the third step was allowed to react at 60°C for 60 minutes, the temperature was further raised to 85°C, and the mixture was allowed to react for 80 minutes. Thereafter, the solution was rapidly cooled, and methanol was added to adjust the viscosity to any level. Thereafter, a trace amount of insoluble matter was removed through a 200-mesh filter to obtain a lignin-modified resol-type phenol resin.

The content of non-volatile matter, the water solubility, the solution resin viscosity, the amount of free phenol, and the amount of free formaldehyde of the obtained lignin-modified phenol resin are as shown in Table 1.

### (Comparative Example 1)

(First Step) 100 parts by weight of phenol was charged into a four-neck flask equipped with a stirrer, a cooling tube, and a thermometer. Next, the temperature of the phenol was adjusted to 60°C. Next, while stirring, 100 parts by weight of alkali lignin having a solid content of 99% by mass, prepared in Example 1, was added in a divided manner to obtain a first mixture. The quantitative ratio of phenol to water in the first mixture was phenol:water (mass ratio) = 1:0.01.

(Second Step) The first mixture was treated under the same conditions as in the second step of Example 1 to obtain a second mixture.

(Third Step) The second mixture obtained in the second step was treated under the same conditions as in the third step of Example 1 to obtain a third mixture.

(Fourth Step) The third mixture obtained in the third step was allowed to react at 60°C for 60 minutes, the temperature was further raised to 85°C, and the mixture was allowed to react for 80 minutes. Thereafter, the mixture was rapidly cooled, and pure water was added to adjust the viscosity to any level. Thereafter, fibrous insoluble matter and lumpy insoluble matter were removed through a 200-mesh filter to obtain a lignin-modified resol-type phenol resin.

The content of non-volatile matter, the water solubility, the solution resin viscosity, the amount of free phenol, and the amount of free formaldehyde of the obtained lignin-modified phenol resin are as shown in Table 1.

### (Comparative Example 2)

(First Step) A first mixture was obtained by the same method as in the first step of Example 2.

(Second Step) The first mixture obtained in the first step was heated to 55°C and stirred for 20 minutes to dissolve the hydrated lignin having a solid content of 59% by mass in the phenol, and it was visually confirmed that there were no suspended matter. The obtained mixture was used as a second mixture.

(Third Step) The second mixture was treated under the same conditions as in the third step of Example 1 to obtain a third mixture.

(Fourth Step) The third mixture obtained in the third step was allowed to react at 60°C for 60 minutes, the temperature was further raised to 85°C, and the mixture was allowed to react for 80 minutes. Thereafter, the mixture was rapidly cooled, and pure water was added to adjust the viscosity to any level. Thereafter, fibrous insoluble matter and lumpy insoluble matter were removed through a 200-mesh filter to obtain a lignin-modified resol-type phenol resin.

The content of non-volatile matter, the water solubility, the solution resin viscosity, the amount of free phenol, and the amount of free formaldehyde of the obtained lignin-modified phenol resin are as shown in Table 1.

### [Table 1]

**Table 1**

| <Formulation> | Unit | Example 1 | Example 2 | Example 3 | Example 4 | Example 5 | Example 6 | Example 7 | Comparative Example 1 | Comparative Example 2 |
|---|---|---|---|---|---|---|---|---|---|---|
| Lignin solid content | 5 by mass | 99 | 59 | 99 | 59 | 59 | 99 | 99 | 99 | 59 |
| Lignin | Parts by weight | 100.0 | 169.5 | 100.0 | 169.5 | 153.9 | 100.0 | 100.0 | 100.0 | 169.5 |
| Phenol (P) | Parts by weight | 100.0 | 100.0 | 100.0 | 100.0 | 80.0 | 100.0 | 100.0 | 100.0 | 100.0 |
| Water | Parts by weight | 69.5 | - | 42.9 | - | - | 42.9 | 42.9 | - | - |
| Cashew nut shell oil | Parts by weight | - | - | - | - | 20 | - | - | - | - |
| 98% Sulfuric acid | Parts by weight | | | | | | 0.4 | 0.4 | | |
| 50% Aqueous solution of sodium hydroxide | Parts by weight | 20.0 | 20.0 | 20.0 | 20.0 | 20 | 20.5 | 0.0 | 20.0 | 20.0 |
| Triethylamine | Parts by weight | | | | | | - | 30.0 | | |
| 37% Formaldehyde | Parts by weight | 146.4 | 146.4 | 146.4 | 146.4 | 124.2 | 137.7 | 86.2 | 146.4 | 146.4 |
| Methanol | Parts by weight | | | | | | - | 201.4 | | |
| F/P molar ratio | - | 1.70 | 1. 70 | 1. 70 | 1. 70 | 1.80 | 1.60 | 1.00 | 1. 70 | 1. 70 |

| <Treatment conditions in each step> | | | | | | | | | | |
|---|---|---|---|---|---|---|---|---|---|---|
| Solvent charged in first step | - | Phenol, Water | Phenol | Phenol, Water | Phenol | Phenol | Phenol, Water | Phenol, Water | Phenol | Phenol |
| Phenol/water mass ratio of first mixture | Phenol:Water | 1:0.7 | 1:0.7 | 1:0.44 | 1:0.7 | 1:0.79 | 1:0.7 | 1:0.7 | 1:0.01 | 1:0.7 |
| Mixing method of lignin in first step | - | Divided addition | Divided addition | Divided addition | Divided addition | Divided addition | Divided addition | Divided addition | Divided addition | Divided addition |
| Presence or absence of dehydration of first mixture | - | Absence | Absence | Presence | Presence | Presence | Presence | Presence | Absence | Absence |
| Dissolution condition in second step | - | 90 °C/20min | 90 °C/20min | 90 °C/20min | 90 °C/20min | 90 °C/20min | 90 °C/20min | 90 °C/20min | 90 °C/20min | 55 °C/40min |
| Presence or absence of method for producing phenolized lignin | - | Absence | Absence | Absence | Absence | Absence | Presence | Presence | Absence | Absence |
| Components used in third step | - | Catalyst, Formalin | Catalyst, Formalin | Catalyst, Formalin | Catalyst, Formalin | Cashew nut oil, Catalyst, Formalin | Catalyst, Formalin | Catalyst, Formalin | Catalyst, Formalin | Catalyst, Formalin |
| Reaction conditions in fourth step | - | 85 °C/80min | 85 °C/80min | 85 °C/40min | 85 °C/40min | 85 °C/80min | 85 °C/40min | 85 °C/20min | 85 °C/80min | 85 °C/80min |

| <Characteristics lignin-modified resol-type phenol resin> | | | | | | | | | | |
|---|---|---|---|---|---|---|---|---|---|---|
| Viscosity | mPa ·s | 756 | 758 | 753 | 741 | 774 | 740 | 35 | 766 | 741 |
| Water solubility | Times | 25< | 25< | 25< | 25< | 25< | 25< | 0 | 25< | 25< |
| Non-volatile matter | % by mass | 55 | 55 | 55 | 54 | 41 | 55 | 46 | 56 | 55 |
| Content of free phenol | % by mass | 4.9 | 4.6 | 4.1 | 4.2 | 3. 9 | 4.5 | 9 | 5.0 | 5.3 |
| Content of free formaldehyde | % by mass | 0.6 | 0.7 | 0.2 | 0.3 | 0.3 | 0.6 | 0.9 | 0.6 | 0.6 |

In the lignin-modified resol-type phenol resins produced by the methods of Example, the content of unreacted free phenol was reduced, and the content of unreacted free formaldehyde was reduced. In addition, the reaction mixture obtained in the fourth step of the method in each Example contained a small amount of fibrous insoluble matter. On the other hand, the reaction mixture obtained in the fourth step of the method of each of Comparative Examples contained fibrous insoluble matter and lumpy insoluble matter. In Examples 3 and 4 in which the first mixture was subjected to a distillation dehydration treatment, the reaction time in the fourth step could be shortened. In Example 5 in which the distillation dehydration treatment was performed on the first mixture, a homogeneous solution of the third mixture could be obtained even when the cashew shell oil was mixed in the third step.

This application claims priority on the basis of Japanese Patent Application No. 2022-090308 filed on June 2, 2022, the entire disclosure of which is incorporated herein by reference.

## Claims

1. A method for producing a lignin-modified resol-type phenol resin, the method comprising:
a step of obtaining a first mixture containing phenols, water, and lignins, in which a ratio between the phenols and the water is 1:0.03 to 1:1.5 in terms of mass ratio of phenols to water;
a step of obtaining a second mixture by heating the first mixture at a temperature of 70°C to 120°C at a pH of 7 or less to dissolve the lignins in the phenols and the water;
a step of obtaining a third mixture by adding aldehydes and a basic catalyst to the second mixture to adjust a pH to 7.5 to 12; and
a step of obtaining a lignin-modified resol-type phenol resin by heating the third mixture at a temperature of 60°C to 105°C, and allowing the lignins, the phenols, and the aldehydes to react with each other in a presence of the basic catalyst.

2. The method for producing a lignin-modified resol-type phenol resin according to Claim 1,
wherein the step of obtaining the first mixture includes
a step of preparing hydrated lignins formed of water and lignins, and
a step of obtaining the first mixture by mixing the hydrated lignins and the phenols.

3. The method for producing a lignin-modified resol-type phenol resin according to Claim 1 or 2, further comprising:
a step of reducing the water from the first mixture by distilling the first mixture, after the step of obtaining the first mixture and before the step of obtaining the second mixture.

4. The method for producing a lignin-modified resol-type phenol resin according to any one of Claims 1 to 3,
wherein a weight average molecular weight of the lignins is 2,000 or more and 100,000 or less.

5. The method for producing a lignin-modified resol-type phenol resin according to any one of Claims 1 to 4,
wherein the step of obtaining the third mixture includes a step of further adding a phenol compound and/or a vegetable oil to the second mixture, and
the step of obtaining the lignin-modified resol-type phenol resin includes a step of obtaining the lignin-modified resol-type phenol resin by heating the third mixture at a temperature of 60°C to 105°C, and allowing the phenol compound and/or the vegetable oil, the lignins, the phenols, and the aldehydes to react with each other in the presence of the basic catalyst.

6. The method for producing a lignin-modified resol-type phenol resin according to Claim 5,
wherein the step of obtaining the third mixture by adding the phenol compound, the aldehydes, and the basic catalyst to the second mixture to adjust the pH to 7.5 to 12 includes
a step of obtaining a mixed solution by mixing the phenol compound with the second mixture and then heating the mixture to dissolve the phenol compound and/or the vegetable oil in the phenols and the water,
a step of adding the basic catalyst to the mixed solution to adjust a pH to 7.5 to 12, and
a step of obtaining the third mixture by mixing the aldehydes with the mixed solution in which the pH is adjusted.

7. The method for producing a lignin-modified resol-type phenol resin according to Claim 5 or 6,
wherein the phenol compound includes alkylphenols.

8. The method for producing a lignin-modified resol-type phenol resin according to any one of Claims 5 to 7,
wherein the vegetable oil includes at least one selected from cashew nut oil, castor oil, soybean oil, tung oil, linseed oil, tannin, pyrogallol, and tall oil.

9. A method for producing a lignin-modified resol-type phenol resin, the method comprising:
a step of obtaining a first mixture containing phenols, water, and lignins, in which a ratio between the phenols and the water is 1:0.03 to 1:1.5 in terms of mass ratio of phenols to water;
a step of obtaining a second mixture by heating the first mixture at a temperature of 70°C to 120°C at a pH of 7 or less to dissolve the lignins in the phenols and the water;
a step of obtaining a third mixture by adding a strong acid during or after obtaining the second mixture and heating the mixture to allow the lignins and the phenols to react with each other to obtain a reaction mixture containing phenolized lignins, and adding aldehydes and a basic catalyst to the reaction mixture to adjust a pH to 7.5 to 12; and
a step of obtaining a lignin-modified resol-type phenol resin by heating the third mixture at a temperature of 60°C to 105°C and allowing the phenolized lignins and the aldehydes to react with each other in the presence of the basic catalyst.

10. The method for producing a lignin-modified resol-type phenol resin according to Claim 9, further comprising:
a step of reducing the water from the second mixture by distilling the second mixture, after the step of obtaining the second mixture and before the step of obtaining the third mixture.

11. The method for producing a lignin-modified resol-type phenol resin according to Claim 9 or 10,
wherein the step of obtaining the third mixture includes a step of obtaining a third mixture containing phenolized lignins by adding a strong acid during or after obtaining the second mixture and heating the mixture to allow the lignins and the phenols to react with each other, a step of dehydrating the third mixture by distillation and solvating the third mixture with alcohols or ketones, and a step of obtaining the third mixture by adding aldehydes and a basic catalyst to a solution containing the alcohols or ketones to adjust a pH to 7.5 to 12.
